# FASCICULE DE BREVET EUROPEEN

(11) **EP 4 531 640 B1**
(45) Date de publication et mention de la délivrance du brevet: **29.04.2026**
(21) Numéro de dépôt: 23729718.9
(22) Date de dépôt: 26.05.2023
(51) Int. Cl.: A47J 36/02, A47J 27/00

(54) **SUPPORT DE CUISSON METALLIQUE REVETU POUVANT ETRE CHAUFFE PAR INDUCTION**
DURCH INDUKTION HEIZBARES BESCHICHTETES METALLISCHES KOCHGEFÄSS
COATED METAL COOKING VESSEL THAT CAN BE HEATED BY INDUCTION

(30) Priorité: 30.05.2022 FR 2205156
(43) Date de publication de la demande: 09.04.2025
(60) Demande divisionnaire: 26166233.2
(73) Titulaire: SEB S.A., 69130 Ecully (FR)
(72) Inventeur: ALLEMAND, Simon, 69134 ECULLY CEDEX (FR); CUILLERY, Pascal, 69134 ECULLY CEDEX (FR)
(74) Mandataire: SEB Développement
(86) Numéro de dépôt international: PCT/EP2023/064183
(87) Numéro de publication internationale: WO 2023/232680

(56) Documents cités:
- EP-B1- 2 443 974
- JP-A- H10 125 453
- US-A1- 2007 275 263

## Description

La présente invention concerne le domaine technique des supports de cuisson métalliques compatibles avec un chauffage par induction, pour cuire ou réchauffer des aliments. De tels supports de cuisson métalliques peuvent être utilisés avec un dispositif de chauffage par induction tels qu'une plaque à induction posée ou intégrée à un plan de travail, ou qu'un foyer de chauffe par induction intégré à un appareil électrique de cuisson.

La présente invention concerne plus particulièrement les supports de cuisson métalliques revêtus compatibles avec un chauffage par induction.

La présente invention concerne notamment, mais non exclusivement, les supports de cuisson métalliques revêtus formant un récipient de cuisson.

La présente invention concerne également les articles culinaires comprenant un support de cuisson métallique revêtu associé à au moins un organe de préhension. Si désiré le ou les organes de préhension peuvent être amovibles ou démontables par rapport au support de cuisson métallique revêtu.

La présente invention concerne également les appareils électriques de cuisson comportant un support de cuisson métallique revêtu associé à un dispositif de chauffage par induction.

Il est connu du document JP H10 125453 de réaliser, selon l'exemple de réalisation de la [Fig.3], un article culinaire multicouches comportant une calotte en alliage d'aluminium, une couche à point de Curie agencée sur la partie externe du fond de la calotte, ainsi qu'une couche conductrice de protection sur la face extérieure de chauffe, avec un revêtement fluoré prévu sur la face interne de cuisson. Une telle réalisation permet de réaliser un article culinaire pouvant être chauffé par induction. Le document EP 2 443 974 B1 décrit un support de cuisson métallique revêtu compatible avec un chauffage par induction.

Toutefois cette couche à point de Curie est une couche d'acier inoxydable déposée par dépôt à arc (Arc Spray). Une telle réalisation apparait relativement onéreuse.

Différents aspects de la présente invention visent à remédier aux inconvénients de l'art antérieur en proposant un support de cuisson métallique revêtu compatible avec un chauffage par induction, dont le prix de revient est limité.

Un premier aspect de la présente invention concerne un support de cuisson métallique revêtu compatible avec un chauffage par induction, qui présente une face de cuisson et une face de chauffe présentant un fond configuré pour reposer sur un dispositif de chauffage par induction, le support de cuisson métallique revêtu comportant un substrat métallique portant un revêtement de protection formant une surface de chauffe de la face de chauffe, le substrat métallique portant un revêtement antiadhésif formant une surface de cuisson de la face de cuisson, ou formant une surface de cuisson de la face de cuisson, du fait qu'au moins dans une partie du fond une couche riche en ferrite est agencée entre le substrat métallique et le revêtement de protection, la couche riche en ferrite présentant une température de Curie, une forte perméabilité magnétique jusqu'à la température de Curie, ainsi qu'une très forte résistivité électrique, et qu'une couche fine électriquement conductrice est agencée entre la couche riche en ferrite et le revêtement de protection. La couche riche en ferrite, par sa forte perméabilité magnétique jusqu'à la température de Curie, permet de canaliser le champ magnétique et d'éviter les fuites magnétiques vers le substrat métallique qui limiterait la compatibilité induction du support de cuisson métallique revêtu. Le champ magnétique se concentre ainsi dans la couche fine électriquement conductrice. Celle-ci étant conductrice et de faible épaisseur, la création de courant de Foucault permet son échauffement par effet Joule. Ainsi la couche riche en ferrite permet de conférer au support de cuisson métallique revêtu une compatibilité avec un dispositif de chauffage par induction.

La couche fine électriquement conductrice peut recouvrir la couche riche en ferrite, sans nécessairement recouvrir les bords de la couche riche en ferrite.

La couche riche en ferrite peut s'étendre sur l'ensemble du fond, permettant d'éviter toutes fuites magnétiques, notamment sur des dispositifs de chauffe par induction de diamètre inférieur à celui du support de cuisson métallique revêtu. Cette disposition permet d'améliorer le fonctionnement sur différentes tailles de dispositifs de chauffe par induction.

La couche fine électriquement conductrice peut s'étendre sur l'ensemble du fond. Cette disposition permet un échauffement sur l'ensemble du fond du dispositif de cuisson, l'échauffement étant généré dans la couche fine électriquement conductrice.

Le substrat métallique peut présenter une épaisseur comprise entre 2 mm et 6 mm lorsque portant le revêtement antiadhésif ou comprise entre 0,4 et 3 mm lorsque dépourvu de revêtement antiadhésif.

La couche riche en ferrite peut présenter une perméabilité magnétique relative comprise entre 10 et 1000, de préférence comprise entre 100 et 1000.

La couche riche en ferrite peut présenter une résistivité électrique comprise entre 0,1 et 1000 Ohm.m, de préférence comprise entre 1 et 100 Ohm.m.

La couche riche en ferrite peut présenter une température de Curie comprise entre 180°C et 250°.

Selon l'invention, la couche riche en ferrite est formée par des charges de ferrite disposées dans une matrice organique ou inorganique. Les charges de ferrite pourraient également être déposées par projection thermique.

La couche fine électriquement conductrice peut présenter une épaisseur comprise en 5 et 100 µm, de préférence comprise entre 5 et 25 µm.

La couche fine électriquement conductrice peut présenter une résistivité électrique comprise entre 1 et 100 µOhm.cm, de préférence comprise entre 1 et 10 µOhm.cm.

La couche fine électriquement conductrice peut être réalisée notamment en alliage d'aluminium, ou en alliage de cuivre, ou en alliage d'argent.

Le revêtement de protection peut notamment être un revêtement de type PTFE, ou un revêtement de type émail, ou un revêtement de type laque, ou un revêtement de type céramique, ou un revêtement de type sol-gel, ou un revêtement à base de résine silicone, ou un revêtement à base de résine silicone-polyester. Le revêtement de protection peut être monocouche ou multicouches. Si désiré, d'autres revêtements de protection peuvent être envisagés.

Le revêtement antiadhésif peut être un revêtement de type PTFE, ou un revêtement de type céramique, ou un revêtement de type sol-gel, ou un revêtement à base de résine silicone, ou un revêtement à base de résine silicone-polyester. Le revêtement antiadhésif peut être monocouche ou multicouches. Si désiré, d'autres revêtements anti-adhésifs compatibles avec le contact alimentaire peuvent être envisagés.

Une paroi latérale peut s'élever autour du fond de la face de chauffe pour former un récipient de cuisson.

La couche riche en ferrite et la couche fine électriquement conductrice peuvent s'étendre sur l'ensemble de la paroi latérale, permettant d'éviter toutes fuites magnétiques, notamment sur des dispositifs de chauffe par induction de diamètre supérieur à celui du support de cuisson.

Au moins une partie de la paroi latérale peut être dépourvue de couche riche en ferrite et de couche fine électriquement conductrice, notamment une partie supérieure de la paroi latérale.

Ainsi la couche riche en ferrite et la couche fine électriquement conductrice peuvent s'étendre sur au moins une partie inférieure de la paroi latérale.

L'ensemble de la paroi latérale peut être dépourvu de couche riche en ferrite et de couche fine électriquement conductrice. Cette disposition permet de faciliter le dépôt de la couche riche en ferrite et de la couche fine électriquement conductrice.

Un deuxième aspect de la présente invention concerne un article culinaire comportant un support de cuisson métallique revêtu et un organe de préhension monté sur le support de cuisson métallique revêtu, dans lequel le support de cuisson métallique revêtu est conforme à l'une au moins des caractéristiques précitées.

Un troisième aspect de la présente invention concerne un appareil électrique de cuisson comportant un support de cuisson métallique revêtu associé à un foyer de chauffe par induction, dans lequel le support de cuisson métallique revêtu est conforme à l'une au moins des caractéristiques précitées.

D'autres caractéristiques et attributs de la présente invention apparaîtront plus clairement à la lecture de la description détaillée qui suit d'exemples de réalisation et de variantes, pris à titre nullement limitatif, illustrés dans les figures annexées, dans lesquelles :
La [Fig.1] représente une vue schématique en élévation et en coupe transversale d'un premier exemple de réalisation d'un support de cuisson métallique revêtu selon l'invention,
La [Fig.2] représente une vue schématique en élévation et en coupe transversale d'un deuxième exemple de réalisation d'un support de cuisson métallique revêtu selon l'invention,
La [Fig.3] représente une vue schématique en élévation et en coupe transversale d'un troisième exemple de réalisation d'un support de cuisson métallique revêtu selon l'invention,
La [Fig.4] représente une vue schématique en élévation et en coupe transversale d'un quatrième exemple de réalisation d'un support de cuisson métallique revêtu selon l'invention,
La [Fig.5] représente une vue schématique en élévation et en coupe transversale d'un cinquième exemple de réalisation d'un support de cuisson métallique revêtu selon l'invention,
La [Fig.6] représente une vue schématique en élévation et en coupe transversale d'un exemple de réalisation d'un article culinaire comportant un support de cuisson métallique revêtu selon l'invention,
La [Fig.7] représente une vue schématique en élévation et en coupe transversale d'un exemple de réalisation d'un appareil électrique de cuisson comportant un support de cuisson métallique revêtu selon l'invention.

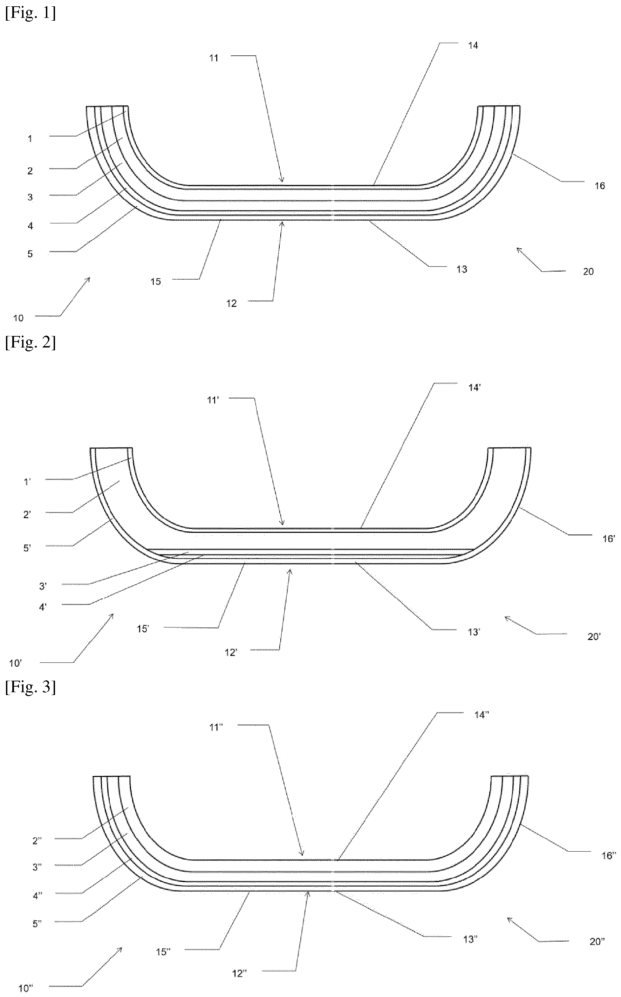

Les figures 1 et 2 illustrent deux exemples de réalisation d'un support de cuisson métallique revêtu 10 ; 10' compatible avec un chauffage par induction. Le support de cuisson métallique revêtu 10 ; 10' compatible avec un chauffage par induction présente une face de cuisson 11 ; 11' et une face de chauffe 12 ; 12'. La face de chauffe 12 ; 12' présente un fond 13 ; 13' configuré pour reposer sur un dispositif de chauffage par induction.

Le support de cuisson métallique revêtu 10 ; 10' comporte un substrat métallique 2 ; 2' portant un revêtement antiadhésif 1 ; 1' formant une surface de cuisson 14 ; 14' de la face de cuisson 11 ; 11'. Le revêtement antiadhésif 1 ; 1' est par exemple un revêtement de type PTFE (en d'autres termes, un revêtement à base de résine fluorée de type PTFE), ou un revêtement de type céramique, ou un revêtement de type sol-gel (en d'autres termes, un revêtement synthétisé par voie sol-gel). Le revêtement antiadhésif 1 ; 1" peut être monocouche ou multicouches.

Le substrat métallique 2 ; 2' est avantageusement réalisé en aluminium.

De manière préférée, le substrat métallique 2 ; 2' présente une épaisseur comprise entre 2 mm et 6 mm.

Les figures 3, 4 et 5 illustrent trois autres exemples de réalisation d'un support de cuisson métallique revêtu 10" ; 10‴ ; 10ʺʺ compatible avec un chauffage par induction. Le support de cuisson métallique revêtu 10" ; 10‴ ; 10ʺʺ compatible avec un chauffage par induction présente une face de cuisson 11" ; 11‴ ; 11ʺʺ et une face de chauffe 12" ; 12‴ ; 12"". La face de chauffe 12" ; 12"' ; 12ʺʺ présente un fond 13" ; 13‴ ; 13"" configuré pour reposer sur un dispositif de chauffage par induction.

Le support de cuisson métallique revêtu 10" ; 10"' ; 10ʺʺ se différencie du support métallique revêtu 10 ; 10' en ce qu'il comporte un substrat métallique 2" ; 2‴ ; 2ʺʺ formant une surface de cuisson 14" ; 14‴ ; 14ʺʺ de la face de cuisson 11" ; 11‴ ; 11ʺʺ. Ainsi le substrat métallique 2" ; 2‴ ; 2"" est dépourvu de revêtement antiadhésif. Le substrat métallique 2" ; 2"' ; 2ʺʺ comporte avantageusement une couche d'acier inoxydable formant la surface de cuisson 14" ; 14"' ; 14ʺʺ réalisée en acier inoxydable. Le substrat métallique 2", 2‴ est avantageusement réalisé en matériau multicouches comportant une couche d'acier inoxydable formant la surface de cuisson 14" ; 14"', notamment en matériau bi-couches acier inoxydable/ aluminium. Le substrat métallique 2", 2‴ peut notamment comporter une couche d'aluminium. A titre de variante, le substrat métallique 2", 2"' peut être formé par une couche d'acier inoxydable. De manière préférée, le substrat métallique 2" ; 2‴ présente une épaisseur comprise entre 0,4 mm et 3 mm. Le substrat métallique 2ʺʺ est avantageusement formé par une couche d'acier inoxydable formant la surface de cuisson 14"", sous laquelle est assemblée une couche de diffusion thermique 17 s'étendant uniquement dans la zone du fond 13ʺʺ, la couche de diffusion thermique 17 étant avantageusement réalisée en aluminium. A titre de variante, le substrat métallique 2ʺʺ peut être réalisé en matériau multicouches comportant une couche d'acier inoxydable formant la surface de cuisson 14ʺʺ, notamment en matériau tri-couches acier inoxydable/aluminium/acier inoxydable. De manière préférée, le substrat métallique 2ʺʺ présente une épaisseur comprise entre 0,4 mm et 3 mm. De manière préférée, la couche de diffusion thermique 17 présente une épaisseur comprise entre 2 mm et 10 mm.

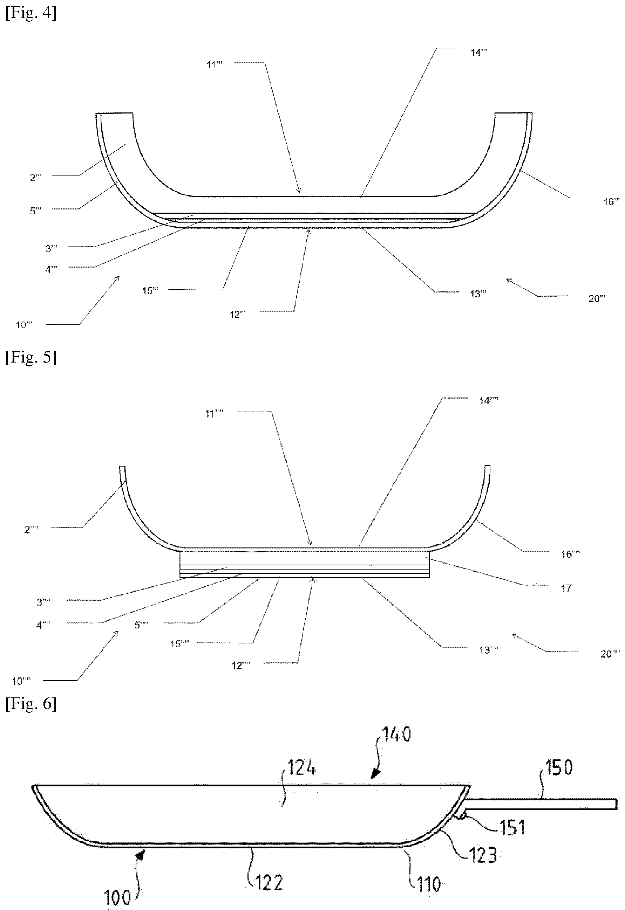

Une couche riche en ferrite 3 ; 3' ; 3" ; 3‴ ; 3ʺʺ est agencée entre le substrat métallique 2 ; 2' ; 2" ; 2‴ ; 2ʺʺ et un revêtement de protection 5 ; 5' ; 5" ; 5‴ ; 5"". Dans les exemples de réalisation illustrés sur les figures 1, 2, 3 et 4, la couche riche en ferrite 3 ; 3' ; 3" ; 3‴ est disposée sur le substrat métallique 2 ; 2' ; 2" ; 2‴. Dans l'exemple de réalisation illustré sur la [Fig.5], la couche riche en ferrite 3ʺʺ est disposée sur la couche de diffusion thermique 17. La couche riche en ferrite 3 ; 3' ; 3" ; 3‴ ; 3"" présente une température de Curie, une forte perméabilité magnétique jusqu'à la température de Curie, ainsi qu'une très forte résistivité électrique. De préférence, la couche riche en ferrite 3 ; 3' ; 3" ; 3‴ ; 3ʺʺ présente une température de Curie comprise entre 180°C et 250°. La couche riche en ferrite 3 ; 3' ; 3" ; 3‴ ; 3ʺʺ présente une perméabilité magnétique relative comprise entre 10 et 1000, de préférence comprise entre 100 et 1000. La couche riche en ferrite 3 ; 3' ; 3" ; 3‴ ; 3ʺʺ présente une résistivité électrique comprise entre 0,1 et 1000 Ohm.m, de préférence comprise entre 1 et 100 Ohm.m. La couche riche en ferrite 3 ; 3' ; 3" ; 3‴; 3ʺʺ est formée par des charges de ferrite disposées dans une matrice organique ou inorganique.

Dans les exemples de réalisation représentés sur les figures 1 et 2 ainsi que dans les exemples de réalisation représentés sur les figures 3, 4 et 5, la couche riche en ferrite 3 ; 3' ; 3" ; 3‴ ; 3ʺʺ s'étend sur l'ensemble du fond 13 ; 13' ; 13" ; 13"' ; 13"". A titre de variante, la couche riche en ferrite 3 ; 3' ; 3" ; 3‴ ; 3ʺʺ pourrait être agencée entre le substrat métallique 2 ; 2' ; 2" ; 2"' ; 2ʺʺ et le revêtement de protection 5 ; 5' ; 5" ; 5‴ ; 5ʺʺ au moins dans une partie du fond 13 ; 13' ; 13" ; 13‴ ; 13"".

Une couche fine électriquement conductrice 4 ; 4' ; 4" ; 4‴ ; 4ʺʺ est agencée entre la couche riche en ferrite 3 ; 3' ; 3" ; 3‴ ; 3ʺʺ et le revêtement de protection 5 ; 5' ; 5" ; 5‴ ; 5ʺʺ. La couche fine électriquement conductrice 4 ; 4' ; 4" ; 4"' ; 4"" présente une épaisseur comprise en 5 et 100 µm, de préférence comprise entre 5 et 25 µm. La couche fine électriquement conductrice 4 ; 4' ; 4" ; 4‴ ; 4ʺʺ présente une perméabilité magnétique relative de 1. La couche fine électriquement conductrice 4 ; 4' ; 4" ; 4‴ ; 4ʺʺ présente une résistivité électrique comprise entre 1 et 100 µOhm.cm, de préférence comprise entre 1 et 10 µOhm.cm. La couche fine électriquement conductrice 4 ; 4' ; 4" ; 4‴ ; 4"" peut notamment être réalisée en alliage d'aluminium, ou en alliage de cuivre ou en alliage d'argent.

Le substrat métallique 2 ; 2' ; 2" ; 2‴ ; 2ʺʺ porte le revêtement de protection 5 ; 5' ; 5" ; 5‴ ; 5ʺʺ formant une surface de chauffe 15 ; 15' ; 15" ; 15‴ ; 15ʺʺ de la face de chauffe 12 ; 12' ; 12" ; 12‴ ; 12"". Le revêtement de protection 5 ; 5' ; 5" ; 5‴ ; 5ʺʺ est par exemple un revêtement de type PTFE (PolyTétraFluoroEthylène ; en d'autres termes, un revêtement à base de résine fluorée de type PTFE), ou un revêtement de type émail, ou un revêtement de type laque, ou un revêtement de type céramique, ou un revêtement de type sol-gel (en d'autres termes, un revêtement synthétisé par voie sol-gel). Le revêtement de protection 5 ; 5' ; 5" ; 5‴ ; 5ʺʺ peut être monocouche ou multicouches.

Le revêtement de protection 5 ; 5' ; 5" ; 5‴ ; 5ʺʺ et/ou le revêtement antiadhésif 1 ; 1' peu(ven)t aussi être un/des revêtement(s) à base de résine silicone ou de résine silicone-polyester. Les résines silicones-polyesters sont très répandues dans la moulerie car elles sont antiadhésives tout en étant adhérentes au substrat et compatibles avec des procédés d'emboutissage. Néanmoins, elles se dégradent à des températures supérieures à 230°C. L'utilisation de la couche riche en ferrite 3 ; 3' ; 3" ; 3‴ ; 3ʺʺ permet de limiter la température du support de cuisson métallique revêtu 10 ; 10' ; 10" ; 10"' ; 10ʺʺ lorsque celui-ci est chauffé par induction, et d'envisager l'utilisation de résines silicones-polyesters pour le revêtement de protection 5 ; 5' ; 5" ; 5‴ ; 5ʺʺ et/ ou le revêtement antiadhésif 1 ; 1'.

Dans les exemples de réalisation représentés sur les figures 1 et 2, ainsi que dans les exemples de réalisation représentés sur les figures 3, 4 et 5, la couche fine électriquement conductrice 4 ; 4' ; 4" ; 4‴ ; 4ʺʺ s'étend sur l'ensemble du fond 13 ; 13' ; 13" ; 13‴ ; 13"".

A titre de variante, la couche fine électriquement conductrice 4 ; 4' ; 4" ; 4‴ ; 4ʺʺ pourrait s'étendre au moins dans la ou les parties du fond 13 ; 13' ; 13" ; 13‴ ; 13ʺʺ présentant la couche riche en ferrite 3 ; 3' ; 3" ; 3‴ ; 3ʺʺ. Ainsi en d'autres termes, la couche fine électriquement conductrice 4 ; 4' ; 4" ; 4‴ ; 4ʺʺ recouvre la couche riche en ferrite 3 ; 3' ; 3" ; 3‴ ; 3ʺʺ.

Dans l'exemple de réalisation illustré sur la [Fig.2], ainsi que dans les exemples de réalisation illustrés sur les figures 4 et 5, la couche riche en ferrite 3' ; 3‴ ; 3ʺʺ s'étend uniquement sur le fond 13' ; 13‴ ; 13ʺʺ, et la couche fine électriquement conductrice 4' ; 4‴ ; 4ʺʺ s'étend uniquement sur le fond 13' ; 13‴ ; 13"". La couche fine électriquement conductrice 4' ; 4‴ ; 4ʺʺ recouvre la couche riche en ferrite 3' ; 3‴, 3ʺʺ sans nécessairement recouvrir les bords de la couche riche en ferrite 3' ; 3‴ ; 3"', tel que représenté notamment sur la [Fig.5] dans laquelle la couche riche en ferrite 3ʺʺ est disposée sous la couche de diffusion thermique 17. Il est à noter que sur les figures 1 et 2 ainsi que sur les figures 3, 4 et 5 les épaisseurs de la couche fine électriquement conductrice 4 ; 4' ; 4" ; 4"' ; 4ʺʺ et de la couche riche en ferrite 3 ; 3' ; 3" ; 3‴ ; 3ʺʺ ne sont pas nécessairement représentées à l'échelle par rapport au substrat métallique 2 ; 2' ; 2" ; 2‴ ; 2ʺʺ, et/ou par rapport au revêtement antiadhésif 1 ; 1', et/ou par rapport au revêtement de protection 5 ; 5' ; 5" ; 5‴ ; 5ʺʺ, ou même par rapport à la couche de diffusion thermique 17.

Dans les exemples de réalisation représentés sur les figures 1 et 2, ainsi que dans les exemples de réalisation représentés sur les figures 3, 4 et 5, une paroi latérale 16 ; 16' ; 16" ; 16‴ ; 16ʺʺ s'élève autour du fond 13 ; 13' ; 13" ; 13‴ ; 13ʺʺ de la face de chauffe 12 ; 12' ; 12" ; 12‴ ; 12ʺʺ pour former un récipient de cuisson 20 ; 20' ; 20" ; 20‴ ; 20"". A titre de variante, le support de cuisson métallique revêtu 10 ; 10' ; 10" ; 10‴ ; 10ʺʺ ne comporte pas nécessairement une paroi latérale s'élevant autour du fond 13 ; 13' ; 13" ; 13‴ ; 13"".

Dans l'exemple de réalisation représenté sur la [Fig.1] ainsi que dans l'exemple de réalisation illustré sur la [Fig.3], la couche riche en ferrite 3 ; 3" et la couche fine électriquement conductrice 4 ; 4" s'étendent sur l'ensemble de la paroi latérale 16 ; 16".

Dans l'exemple de réalisation représenté sur la [Fig.2] ainsi que dans les exemples de réalisation illustrés sur les figures 4 et 5, l'ensemble de la paroi latérale 16' ; 16‴ ; 16ʺʺ est dépourvu de couche riche en ferrite et de couche fine électriquement conductrice.

A titre de variante, au moins une partie de la paroi latérale pourrait être dépourvue de couche riche en ferrite et de couche fine électriquement conductrice, De préférence alors, la couche fine électriquement conductrice recouvre la couche riche en ferrite, sans nécessairement recouvrir les bords de la couche riche en ferrite.

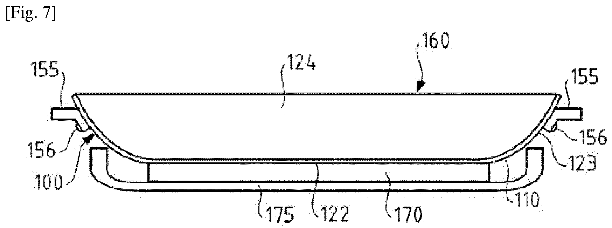

Les figures 6 et 7 illustrent un support de cuisson métallique revêtu 100 présentant une face de chauffe 110. Le support de cuisson métallique revêtu 100 comporte une paroi latérale 123 s'élevant autour d'un fond 122 de la face de chauffe 110 pour former un récipient de cuisson 124. A titre de variante, le support de cuisson métallique revêtu 100 ne forme pas nécessairement un récipient de cuisson 124. Le support de cuisson métallique revêtu 100 peut notamment former une plaque de cuisson.

La [Fig.6] illustre un article culinaire 140 comportant un support de cuisson métallique revêtu 100 formant un récipient de cuisson 124. Le support de cuisson métallique revêtu 100 peut notamment être formé par le support de cuisson métallique revêtu 10 illustré sur la [Fig.1] ou par le support de cuisson métallique revêtu 10' illustré sur la [Fig.2], ou par l'un des supports de cuisson 10" ; 10‴ ; 10ʺʺ illustrés sur les figures 3, 4 et 5. Un organe de préhension 150 est monté sur le récipient de cuisson 124. Dans l'exemple de réalisation illustré sur la [Fig.6], l'organe de préhension 150 est fixé au récipient de cuisson 124 par au moins un rivet 151. A cet effet le rivet 151 est monté dans un trou ménagé dans une paroi latérale 123 du récipient de cuisson. Si désiré plusieurs rivets 151 peuvent être utilisés pour fixer l'organe de préhension 150 sur le récipient de cuisson 124. De préférence entre deux et quatre rivets 151 sont utilisés pour fixer l'organe de préhension 150 sur le récipient de cuisson 124. En alternative l'organe de préhension 150 pourrait être fixé sur la paroi latérale 123 par soudage ou par vissage sur un goujon soudé sur la paroi latérale 123. Si désiré un autre organe de préhension peut être fixé sur la paroi latérale 123 du récipient de cuisson 124 au moyen d'au moins un autre rivet, par soudage ou par vissage sur un goujon soudé sur la paroi latérale 123.

La [Fig.7] illustre un appareil électrique de cuisson 160 comportant un support de cuisson métallique revêtu 100 associé à un foyer de chauffe par induction 170. Le support de cuisson métallique revêtu 100 forme un récipient de cuisson 124. Le support de cuisson métallique revêtu 100 peut notamment être formé par le support de cuisson métallique revêtu 10 illustré sur la [Fig.1] ou par le support de cuisson métallique revêtu 10' illustré sur la [Fig.2], ou par l'un des supports de cuisson métalliques revêtus 10" ; 10‴ ; 10ʺʺ illustrés sur les figures 3, 4 et 5. Le récipient de cuisson 124 est agencé dans une base chauffante 175 comportant le foyer de chauffe par induction 170. Le fond 122 repose sur le foyer de chauffe par induction 170. Si désiré le récipient de cuisson 124 peut comporter au moins un organe de préhension 155. Dans l'exemple de réalisation illustré sur la [Fig.4] le récipient de cuisson 124 comporte deux organes de préhension 155 opposés. Le ou chaque organe de préhension 155 est fixé au récipient de cuisson 124 par au moins un rivet 156. A cet effet le rivet 156 est monté dans un trou ménagé dans la paroi latérale 123. Si désiré plusieurs rivets 156 peuvent être utilisés pour fixer le ou chaque organe de préhension 155 sur le récipient de cuisson 124. De préférence entre deux et quatre rivets 156 sont utilisés pour fixer le ou chaque organe de préhension 155 sur le récipient de cuisson 124. En alternative le ou au moins un des organes de préhension 155 pourrait être fixé sur la paroi latérale 123 par soudage ou par vissage sur un goujon soudé sur la paroi latérale 123.

Diverses modifications et/ou améliorations évidentes pour l'homme du métier peuvent être apportées aux exemples de réalisation de l'invention décrits dans la présente description sans sortir du cadre de l'invention défini par les revendications annexées.

## Revendications

1. Support de cuisson métallique revêtu (10 ; 10' ; 10" ; 10"' ; 10"") compatible avec un chauffage par induction, présentant une face de cuisson (11 ; 11' ; 11" ; 11‴ ; 11ʺʺ) et une face de chauffe (12 ; 12' ; 12" ; 12‴ ; 12"") présentant un fond (13 ; 13' ; 13" ; 13‴ ; 13"") configuré pour reposer sur un dispositif de chauffage par induction, le support de cuisson métallique revêtu (10 ; 10' ; 10" ; 10"' ; 10"") comportant un substrat métallique (2 ; 2' ; 2" ; 2‴ ; 2"") portant un revêtement de protection (5 ; 5' ; 5" ; 5‴ ; 5ʺʺ) formant une surface de chauffe (15 ; 15' ; 15" ; 15‴ ; 15"") de la face de chauffe (12 ; 12' ; 12" ; 12‴ ; 12""), le substrat métallique (2 ; 2' ; 2" ; 2‴ ; 2"") portant un revêtement antiadhésif (1 ; 1') formant une surface de cuisson (14 ; 14') de la face de cuisson (11 ; 11'), ou formant une surface de cuisson (14" ; 14‴ ; 14ʺʺ) de la face de cuisson (11" ; 11‴ ; 11ʺʺ), au moins dans une partie du fond (13 ; 13' ; 13" ; 13‴ ; 13"") une couche riche en ferrite (3 ; 3' ; 3" ; 3‴ ; 3ʺʺ) étant agencée entre le substrat métallique (2 ; 2' ; 2" ; 2‴ ; 2ʺʺ) et le revêtement de protection (5 ; 5' ; 5" ; 5‴ ; 5ʺʺ), la couche riche en ferrite (3 ; 3' ; 3" ; 3‴ ; 3"") présentant une température de Curie, une forte perméabilité magnétique jusqu'à la température de Curie, ainsi qu'une très forte résistivité électrique, une couche fine électriquement conductrice (4 ; 4' ; 4" ; 4‴ ; 4"") étant agencée entre la couche riche en ferrite (3 ; 3' ; 3" ; 3‴ ; 3"") et le revêtement de protection (5 ; 5' ; 5" ; 5‴ ; 5""), **caractérisé en ce que** la couche riche en ferrite (3 ; 3' ; 3" ; 3‴ ; 3"") est formée par des charges de ferrite disposées dans une matrice organique ou inorganique.

2. Support de cuisson métallique revêtu (10 ; 10' ; 10" ; 10"' ; 10"") selon la revendication 1, **caractérisé en ce que** la couche fine électriquement conductrice (4 ; 4' ; 4" ; 4‴ ; 4ʺʺ) recouvre la couche riche en ferrite (3 ; 3' ; 3" ; 3‴ ; 3ʺʺ).

3. Support de cuisson métallique revêtu (10 ; 10' ; 10" ; 10"' ; 10"") selon l'une des revendications 1 ou 2, **caractérisé en ce que** la couche riche en ferrite (3 ; 3' ; 3" ; 3‴ ; 3"") s'étend sur l'ensemble du fond (13 ; 13' ; 13" ; 13‴ ; 13ʺʺ).

4. Support de cuisson métallique revêtu (10 ; 10' ; 10" ; 10"' ; 10"") selon l'une des revendications 1 ou 3, **caractérisé en ce que** la couche fine électriquement conductrice (4 ; 4' ; 4" ; 4‴ ; 4ʺʺ) s'étend sur l'ensemble du fond (13 ; 13' ; 13" ; 13‴ ; 13"").

5. Support de cuisson métallique revêtu (10 ; 10' ; 10" ; 10"' ; 10"") selon l'une des revendications 1 à 4, **caractérisé en ce que** le substrat métallique (2 ; 2') présente une épaisseur comprise entre 2 mm et 6 mm lorsque portant le revêtement antiadhésif (1 ; 1') ou comprise entre 0,4 et 3 mm lorsque dépourvu de revêtement antiadhésif.

6. Support de cuisson métallique revêtu (10 ; 10' ; 10" ; 10"' ; 10"") selon l'une des revendications 1 à 5, **caractérisé en ce que** la couche riche en ferrite (3 ; 3' ; 3" ; 3‴ ; 3"") présente une perméabilité magnétique relative comprise entre 10 et 1000, de préférence comprise entre 100 et 1000.

7. Support de cuisson métallique revêtu (10 ; 10' ; 10" ; 10"' ; 10"") selon l'une des revendications 1 à 6, **caractérisé en ce que** la couche riche en ferrite (3 ; 3' ; 3" ; 3‴ ; 3"") présente une résistivité électrique comprise entre 0,1 et 1000 Ohm.m, de préférence comprise entre 1 et 100 Ohm.m.

8. Support de cuisson métallique revêtu (10 ; 10' ; 10" ; 10"' ; 10"") selon l'une des revendications 1 à 7, **caractérisé en ce que** la couche riche en ferrite (3 ; 3' ; 3" ; 3‴ ; 3"") présente une température de Curie comprise entre 180°C et 250°.

9. Support de cuisson métallique revêtu (10 ; 10' ; 10" ; 10"' ; 10"") selon l'une des revendications 1 à 8, **caractérisé en ce que** la couche fine électriquement conductrice (4 ; 4' ; 4" ; 4‴ ; 4"") présente une épaisseur comprise en 5 et 100 µm, de préférence comprise entre 5 et 25 µm.

10. Support de cuisson métallique revêtu (10 ; 10' ; 10" ; 10"' ; 10"") selon l'une des revendications 1 à 9, **caractérisé en ce que** la couche fine électriquement conductrice (4 ; 4' ; 4" ; 4‴ ; 4"") présente une résistivité électrique comprise entre 1 et 100 µOhm.cm, de préférence comprise entre 1 et 10 µOhm.cm.

11. Support de cuisson métallique revêtu (10 ; 10' ; 10" ; 10"' ; 10"") selon l'une des revendications 1 à 10, **caractérisé en ce que** la couche fine électriquement conductrice (4 ; 4' ; 4" ; 4‴ ; 4ʺʺ) est réalisée en alliage d'aluminium, ou en alliage de cuivre, ou en alliage d'argent.

12. Support de cuisson métallique revêtu (10 ; 10' ; 10" ; 10"' ; 10"") selon l'une des revendications 1 à 11, **caractérisé en ce que** le revêtement de protection (5 ; 5' ; 5" ; 5‴ ; 5"") est un revêtement de type PTFE, ou un revêtement de type émail, ou un revêtement de type laque, ou un revêtement de type céramique, ou un revêtement de type sol-gel, ou un revêtement à base de résine silicone, ou un revêtement à base de résine silicone-polyester.

13. Support de cuisson métallique revêtu (10 ; 10') selon l'une des revendications 1 à 12, **caractérisé en ce que** le revêtement antiadhésif (1 ; 1') est un revêtement de type PTFE, ou un revêtement de type céramique, ou un revêtement de type sol-gel, ou un revêtement à base de résine silicone, ou un revêtement à base de résine silicone-polyester.

14. Support de cuisson métallique revêtu (10 ; 10' ; 10" ; 10"' ; 10"") selon l'une des revendications 1 à 13, **caractérisé en ce qu'**une paroi latérale (16 ; 16' ; 16" ; 16‴ ; 16ʺʺ) s'élève autour du fond (13 ; 13' ; 13" ; 13‴ ; 13ʺʺ) de la face de chauffe (12 ; 12' ; 12" ; 12‴ ; 12ʺʺ) pour former un récipient de cuisson (20 ; 20' ; 20" ; 20‴ ; 20ʺʺ).

15. Article culinaire (140) comportant un support de cuisson métallique revêtu (100) et un organe de préhension (150) monté sur le support de cuisson métallique revêtu (100), **caractérisé en ce que** le support de cuisson métallique revêtu (100) est conforme à l'une des revendications 1 à 14.

16. Appareil électrique de cuisson (160) comportant un support de cuisson métallique revêtu (100) associé à un foyer de chauffe par induction (170), **caractérisé en ce que** le support de cuisson métallique revêtu (100) est conforme à l'une des revendications 1 à 14.

## Patentansprüche

1. Beschichteter metallischer Kochträger (10; 10'; 10"; 10‴; 10ʺʺ) kompatibel mit Induktionserwärmung, mit einer Kochfläche (11; 11'; 11"; 11‴; 11ʺʺ) und einer Heizfläche (12; 12'; 12"; 12‴; 12ʺʺ), die einen Boden (13; 13'; 13"; 13‴; 13ʺʺ) umfasst, der so konfiguriert ist, dass er auf einem Induktionsheizgerät ruht. Der beschichtete metallische Kochträger (10; 10'; 10"; 10"'; 10"") umfasst ein metallisches Substrat (2; 2'; 2"; 2‴; 2ʺʺ), das eine Schutzbeschichtung (5; 5'; 5"; 5‴; 5ʺʺ) trägt und eine Heizfläche (15; 15'; 15"; 15‴; 15ʺʺ) der Heizfläche (12; 12'; 12"; 12‴; 12"") bildet. Das metallische Substrat (2; 2'; 2"; 2‴; 2"") trägt eine Antihaftbeschichtung (1; 1'), die eine Kochfläche (14; 14') der Kochfläche (11; 11') bildet oder eine Kochfläche (14"; 14‴; 14ʺʺ) der Kochfläche (11"; 11‴; 11‴ʺ). Mindestens in einem Teil des Bodens (13; 13'; 13"; 13‴; 13ʺʺ) ist eine ferritreiche Schicht (3; 3'; 3"; 3‴; 3ʺʺ) zwischen dem metallischen Substrat (2; 2'; 2"; 2‴; 2ʺʺ) und der Schutzbeschichtung (5; 5'; 5"; 5‴; 5"") angeordnet. Die ferritreiche Schicht (3; 3'; 3"; 3‴; 3"") weist eine Curie-Temperatur, hohe magnetische Permeabilität bis zur Curie-Temperatur und sehr hohe elektrische Resistivität auf. Eine dünne elektrisch leitfähige Schicht (4; 4'; 4"; 4‴; 4"") ist zwischen der ferritreichen Schicht (3; 3'; 3"; 3‴; 3"") und der Schutzbeschichtung (5; 5'; 5"; 5‴; 5""") angeordnet, wobei sich die ferritreiche Schicht (3; 3'; 3"; 3‴; 3"") durch Ferrit-Füllstoffe in einer organischen oder anorganischen Matrix bildet.

2. Beschichteter metallischer Kochträger (10; 10'; 10"; 10"'; 10"") gemäß Anspruch 1, **dadurch gekennzeichnet, dass** die dünne elektrisch leitfähige Schicht (4; 4'; 4"; 4‴; 4"") die ferritreiche Schicht (3; 3'; 3"; 3‴; 3ʺʺ) bedeckt.

3. Beschichteter metallischer Kochträger (10; 10'; 10"; 10‴; 10"") gemäß einem der Ansprüche 1 oder 2, **dadurch gekennzeichnet, dass** die ferritreiche Schicht (3; 3'; 3"; 3‴; 3ʺʺ) sich über den gesamten Boden (13; 13'; 13"; 13‴; 13ʺʺ) erstreckt.

4. Beschichteter metallischer Kochträger (10; 10'; 10"; 10"'; 10"") gemäß einem der Ansprüche 1 oder 3, **dadurch gekennzeichnet, dass** die dünne elektrisch leitfähige Schicht (4; 4'; 4"; 4‴; 4"") sich über den gesamten Boden (13; 13'; 13"; 13"'; 13"") erstreckt.

5. Beschichteter metallischer Kochträger (10; 10'; 10"; 10"'; 10"") gemäß einem der Ansprüche 1 bis 4, **dadurch gekennzeichnet, dass** das metallische Substrat (2; 2') eine Dicke zwischen 2 mm und 6 mm beim Tragen der Antihaftbeschichtung (1; 1') oder zwischen 0,4 und 3 mm ohne Antihaftbeschichtung aufweist.

6. Beschichteter metallischer Kochträger (10; 10'; 10"; 10"'; 10"") gemäß einem der Ansprüche 1 bis 5, **dadurch gekennzeichnet, dass** die ferritreiche Schicht (3; 3'; 3"; 3‴; 3ʺʺ) eine relative magnetische Permeabilität zwischen 10 und 1000, vorzugsweise zwischen 100 und 1000 aufweist.

7. Beschichteter metallischer Kochträger (10; 10'; 10"; 10"'; 10"") gemäß einem der Ansprüche 1 bis 6, **dadurch gekennzeichnet, dass** die ferritreiche Schicht (3; 3'; 3"; 3‴; 3"") eine elektrische Resistivität zwischen 0,1 und 1000 Ohm.m, vorzugsweise zwischen 1 und 100 Ohm.m aufweist.

8. Beschichteter metallischer Kochträger (10; 10'; 10"; 10"'; 10"") gemäß einem der Ansprüche 1 bis 7, **dadurch gekennzeichnet, dass** die ferritreiche Schicht (3; 3'; 3"; 3‴; 3ʺʺ) eine Curie-Temperatur zwischen 180°C und 250°C aufweist.

9. Beschichteter metallischer Kochträger (10; 10'; 10"; 10"'; 10"") gemäß einem der Ansprüche 1 bis 8, **dadurch gekennzeichnet, dass** die dünne elektrisch leitfähige Schicht (4; 4'; 4"; 4‴; 4ʺʺ) eine Dicke zwischen 5 und 100 µm, vorzugsweise zwischen 5 und 25 µm aufweist.

10. Beschichteter metallischer Kochträger (10; 10'; 10"; 10"'; 10"") gemäß einem der Ansprüche 1 bis 9, **dadurch gekennzeichnet, dass** die dünne elektrisch leitfähige Schicht (4; 4'; 4"; 4"'; 4"") eine elektrische Resistivität zwischen 1 und 100 µOhm.cm, vorzugsweise zwischen 1 und 10 µOhm.cm aufweist.

11. Beschichteter metallischer Kochträger (10; 10'; 10"; 10"'; 10ʺʺ) gemäß einem der Ansprüche 1 bis 10, **dadurch gekennzeichnet, dass** die dünne elektrisch leitfähige Schicht (4; 4'; 4"; 4‴; 4"") aus Aluminiumlegierung, Kupferlegierung oder Silberlegierung hergestellt ist.

12. Beschichteter metallischer Kochträger (10; 10'; 10"; 10"'; 10"") gemäß einem der Ansprüche 1 bis 11, **dadurch gekennzeichnet, dass** die Schutzbeschichtung (5; 5'; 5"; 5‴; 5"") eine PTFE-Beschichtung, eine Emaillbeschichtung, eine Lackbeschichtung, eine Keramikbeschichtung, eine Sol-Gel-Beschichtung, eine Silikonharzbeschichtung oder eine Silikon-Polyesterharzbeschichtung ist.

13. Beschichteter metallischer Kochträger (10; 10') gemäß einem der Ansprüche 1 bis 12, **dadurch gekennzeichnet, dass** die Antihaftbeschichtung (1; 1') eine PTFE-Beschichtung, eine Keramikbeschichtung, eine Sol-Gel-Beschichtung, eine Silikonharzbeschichtung oder eine Silikon-Polyesterharzbeschichtung ist.

14. Beschichteter metallischer Kochträger (10; 10'; 10"; 10"'; 10"") gemäß einem der Ansprüche 1 bis 13, **dadurch gekennzeichnet, dass** eine Seitenwand (16; 16'; 16"; 16‴; 16ʺʺ) sich um den Boden (13; 13'; 13"; 13‴; 13‴) der Heizfläche (12; 12'; 12"; 12‴; 12‴) erhebt, um einen Kochbehälter (20; 20'; 20"; 20‴; 20") zu bilden.

15. Kochartikel (140), das einen beschichteten metallischen Kochträger (100) und ein Halteelement (150) auf dem beschichteten metallischen Kochträger (100) umfasst, **dadurch gekennzeichnet, dass** der beschichtete metallische Kochträger (100) mit einem der Ansprüche 1 bis 14 übereinstimmt.

16. Elektrisches Kochgerät (160), das einen beschichteten metallischen Kochträger (100) in Verbindung mit einem Induktionsheizfeld (170) umfasst, **dadurch gekennzeichnet, dass** der beschichtete metallische Kochträger (100) mit einem der Ansprüche 1 bis 14 übereinstimmt.

## Claims

1. Coated metallic cooking support (10; 10'; 10"; 10‴; 10"") compatible with induction heating, having a cooking surface (11; 11'; 11"; 11‴; 11ʺʺ) and a heating surface (12; 12'; 12"; 12‴; 12ʺʺ) with a bottom (13; 13'; 13"; 13‴; 13ʺʺ) configured to rest on an induction heating device, the coated metallic cooking support (10; 10'; 10"; 10‴; 10"") comprising a metallic substrate (2; 2'; 2"; 2‴; 2"") carrying a protective coating (5; 5'; 5"; 5‴; 5ʺʺ) forming a heating surface (15; 15'; 15"; 15‴; 15ʺʺ) on the heating surface (12; 12'; 12"; 12‴; 12""), the metallic substrate (2; 2'; 2"; 2‴; 2"") carrying a non-stick coating (1; 1') forming a cooking surface (14; 14') on the cooking surface (11; 11'), or forming a cooking surface (14"; 14‴; 14"") on the cooking surface (11"; 11‴; 11ʺʺ), at least in a part of the bottom (13; 13'; 13"; 13‴; 13‴ʺ) a ferrite-rich layer (3; 3'; 3"; 3‴; 3"") being arranged between the metallic substrate (2; 2'; 2"; 2‴; 2ʺʺ) and the protective coating (5; 5'; 5"; 5‴; 5ʺʺ), the ferrite-rich layer (3; 3'; 3"; 3‴; 3‴ʺ) having a Curie temperature, high magnetic permeability up to the Curie temperature, and very high electrical resistivity, a thin electrically conductive layer (4; 4'; 4"; 4‴; 4‴ʺ) being arranged between the ferrite-rich layer (3; 3'; 3"; 3‴; 3ʺʺ) and the protective coating (5; 5'; 5"; 5‴; 5"""); **characterized in that** the ferrite-rich layer (3; 3'; 3"; 3‴; 3"") is formed by ferrite fillers disposed in an organic or inorganic matrix.

2. Coated metallic cooking support (10; 10'; 10"; 10‴; 10ʺʺ) according to claim 1, **characterized in that** the thin electrically conductive layer (4; 4'; 4"; 4‴; 4‴ʺ) covers the ferrite-rich layer (3; 3'; 3"; 3‴; 3‴ʺ).

3. Coated metallic cooking support (10; 10'; 10"; 10‴; 10"") according to either claim 1 or 2, **characterized in that** the ferrite-rich layer (3; 3'; 3"; 3‴; 3ʺʺ) extends over the entire bottom (13; 13'; 13"; 13‴; 13ʺʺ).

4. Coated metallic cooking support (10; 10'; 10"; 10‴; 10"") according to either claim 1 or 3, **characterized in that** the thin electrically conductive layer (4; 4'; 4"; 4‴; 4‴ʺ) extends over the entire bottom (13; 13'; 13"; 13‴; 13"").

5. Coated metallic cooking support (10; 10'; 10"; 10‴; 10"") according to any one of the claims 1 to 4, **characterized in that** the metallic substrate (2; 2') has a thickness between 2 mm and 6 mm when carrying the non-stick coating (1; 1') or between 0.4 and 3 mm when devoid of a non-stick coating.

6. Coated metallic cooking support (10; 10'; 10"; 10‴; 10ʺʺ) according to any one of the claims 1 to 5, **characterized in that** the ferrite-rich layer (3; 3'; 3"; 3"'; 3"") has a relative magnetic permeability between 10 and 1000, preferably between 100 and 1000.

7. Coated metallic cooking support (10; 10'; 10"; 10‴; 10"") according to any one of the claims 1 to 6, **characterized in that** the ferrite-rich layer (3; 3'; 3"; 3"'; 3"") has electrical resistivity between 0.1 and 1000 Ohm.m, preferably between 1 and 100 Ohm.m.

8. Coated metallic cooking support (10; 10'; 10"; 10‴; 10"") according to any one of the claims 1 to 7, **characterized in that** the ferrite-rich layer (3; 3'; 3"; 3"'; 3"") has a Curie temperature between 180°C and 250°.

9. Coated metallic cooking support (10; 10'; 10"; 10‴; 10"") according to any one of the claims 1 to 8, **characterized in that** the thin electrically conductive layer (4; 4'; 4"; 4‴; 4"") has a thickness between 5 and 100 µm, preferably between 5 and 25 µm.

10. Coated metallic cooking support (10; 10'; 10"; 10‴; 10"") according to any one of the claims 1 to 9, **characterized in that** the thin electrically conductive layer (4; 4'; 4"; 4‴; 4"") has electrical resistivity between 1 and 100 µOhm.cm, preferably between 1 and 10 µOhm.cm.

11. Coated metallic cooking support (10; 10'; 10"; 10‴; 10"") according to any one of the claims 1 to 10, **characterized in that** the thin electrically conductive layer (4; 4'; 4"; 4‴; 4"") is made of aluminum alloy, copper alloy, or silver alloy.

12. Coated metallic cooking support (10; 10'; 10"; 10‴; 10"") according to any one of the claims 1 to 11, **characterized in that** the protective coating (5; 5'; 5"; 5‴; 5"") is a PTFE-type coating, or enamel-type coating, or lacquer-type coating, or ceramic-type coating, or sol-gel type coating, or silicone resin-based coating, or silicone-polyester resin-based coating.

13. Coated metallic cooking support (10; 10') according to any one of the claims 1 to 12, **characterized in that** the non-stick coating (1; 1') is a PTFE-type coating, or ceramic-type coating, or sol-gel type coating, or silicone resin-based coating, or silicone-polyester resin-based coating.

14. Coated metallic cooking support (10; 10'; 10"; 10‴; 10"") according to any one of the claims 1 to 13, **characterized in that** a lateral wall (16; 16'; 16"; 16‴; 16"") rises around the bottom (13; 13'; 13"; 13‴; 13‴) of the heating surface (12; 12'; 12"; 12‴; 12‴) to form a cooking container (20; 20'; 20"; 20‴; 20").

15. Culinary article (140) comprising a coated metallic cooking support (100) and a gripping member (150) mounted on the coated metallic cooking support (100), **characterized in that** the coated metallic cooking support (100) conforms to any one of the claims 1 to 14.

16. Electric cooking appliance (160) comprising a coated metallic cooking support (100) associated with an induction heating element (170), **characterized in that** the coated metallic cooking support (100) conforms to any one of the claims 1 to 14.
